# EUROPEAN PATENT APPLICATION

(11) **EP 4 477 391 A1**
(43) Date of publication of application: **18.12.2024**
(21) Application number: 24181370.8
(22) Date of filing: 11.06.2024
(51) Int. Cl.: B29C 65/02, B29C 65/00, B65B 51/30, B65B 9/12, B65B 9/207, B65B 51/22, B29L 31/00, B29C 65/36

(54) **PACKAGING ASSEMBLY FOR FORMING AND SEALING A PLURALITY OF PACKS CONTAINING A POURABLE PRODUCT**

(30) Priority: 16.06.2023 IT 202300012438
(71) Applicant: Tetra Laval Holdings & Finance S.A., 1009 Pully (CH)
(72) Inventor: SERENI, Alessandro, 41123 MODENA (IT); BERTACCHINI, Cesare, 41123 MODENA (IT)
(74) Representative: Tetra Pak - Patent Attorneys SE

(57) **Abstract**

There is described a packaging assembly (1) for forming and sealing a plurality of packages (2) containing a pourable product starting from a tube (3) of packaging material, the packaging assembly (1) comprising:
- a longitudinal axis (A) along which the tube (3) advances;
- a sealing device (7) configured for cyclically sealing the tube (3) at successive cross-sections thereof and having a sealing member (70) and a countersealing member (72) arranged at opposite sides of the longitudinal axis (A); and
- a dispensing device (8) configured to provide a fluid flow (80) cyclically hitting the sealing member (70).

## Description

### Technical Field

The present invention relates to a packaging assembly for forming and sealing a plurality of packages containing a pourable product, preferably a pourable food product.

In particular, the present invention relates to a packaging assembly configured to fill, form, seal, cut and fold packages containing the pourable product starting from a tube of packaging material.

### Background Art

As it is generally known, many pourable food products, such as fruit juice, UHT (ultra-high temperature-treated) milk, wine, tomato sauce, etc., are sold in packages made of sterilized packaging material.

A typical example is the parallelepiped-shaped package for pourable food products known as Tetra Brik Aseptic (registered trademark), which is made by folding and sealing a laminated web of packaging material. The packaging material has a multilayer structure comprising a base layer, e.g. made of paper, covered on both sides with layers of heat-seal plastic material, e.g. polyethylene.

In the case of aseptic packages for long-storage products, such as UHT milk, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Such packages are usually produced in fully automatic packaging assemblies, in which a continuous tube is formed starting from a web of packaging material. A packaging assembly of the above type is known from WO-A-2007114752.

In particular, the web can be sterilized by means of a hydrogen peroxide bath. Downstream of the sterilization device, the web can be folded into a tubular shape, filled with pourable food product and sealed by means of a sealing device comprising a sealing member and a countersealing member cooperating to perform a transversal seal of the tube of packaging material.

Although the known packaging assemblies are functionally valid, the Applicant has observed that they are prone to further improvements. A need is thus felt to extend the lifespan of the components in the sealing device, in particular the sealing member comprising the heating element.

A need is felt for a packaging assembly facilitating reducing the amount of maintenance of the components, e.g. the components in the sealing device.

### Summary of the invention

It is therefore an object of the present invention to provide a packaging assembly, which can facilitate achieving one or more of the above-mentioned needs in a straightforward and low-cost manner. Such an object is achieved by means of a packaging assembly having the features set forth in the claims that follow.

Such packaging assembly may achieve one or more advantages, e.g.:
- a reduction in the corrosion of the sealing member can be achieved,
- the lifetime of the components of the sealing member is prolonged, in particular of the sealing surface,
- a maintenance of the components in the packaging assembly, e.g. in the sealing device, is reduced.

### Brief description of the drawings

Embodiments of the present invention will be described by way of example with reference to the accompanying drawings, in which:
- figure 1 is a perspective view, with parts removed for clarity, of a packaging assembly for producing packages filled with pourable product according to the present invention;
- figure 2 is a larger-scale perspective view, with parts removed for clarity, of a forming and sealing apparatus of the packaging assembly according to one or more embodiments;

- figures 3, 4 and 5 are larger-scale side-views of details of the apparatus according to the invention, during respective distinct operative conditions;
- figure 6 is a perspective view of a sealing member of the apparatus according to the present invention;
- figure 7 is a larger-scale perspective view, with parts removed for clarity, of a detail of the apparatus according to the invention; and
- figure 8 is a schematic side view, with parts removed for clarity, of a detail of the apparatus according to the invention.

### Description of the invention

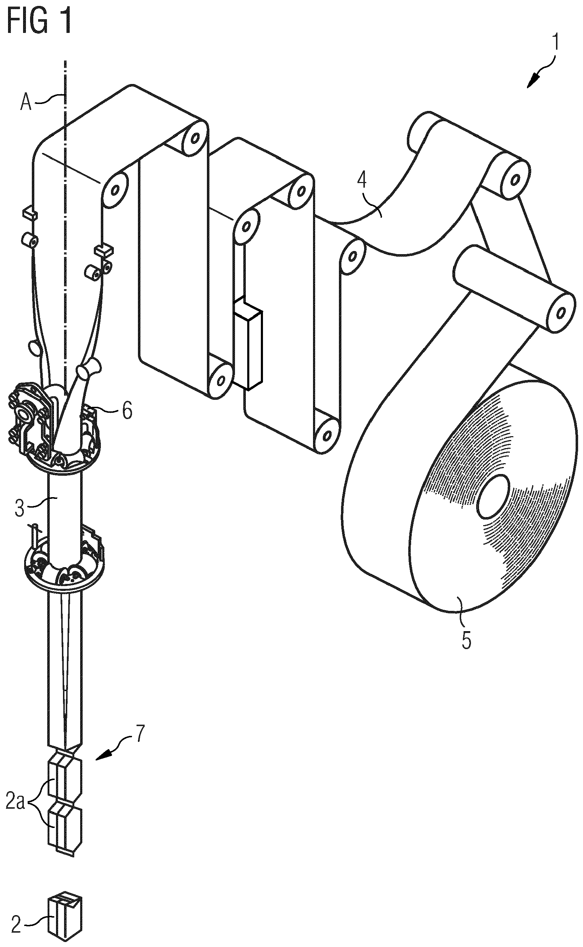

With reference to figure 1, number 1 indicates as a whole a packaging assembly for producing a plurality of sealed packages 2 containing a pourable product, preferably a pourable food product such as pasteurized or UHT milk, water, fruit juice, wine, peas, beans, etc. starting from a tube 3 of packaging material.

In detail, packaging assembly 1 is configured to form tube 3 starting from a web-like sheet 4 of packaging material, which is unwound off a reel 5 and fed along a forming path.

The packaging assembly 1 is configured to form and seal a plurality of pillow packs 2a containing the pourable product starting from tube 3 and then to fold pillow packs 2a for obtaining the aforementioned formed, sealed and folded packages 2 containing the pourable product.

After being unwound off reel 5 and before being formed into tube 3, sheet 4 of packaging material is sterilized, e.g. by applying a chemical sterilizing agent, such as hydrogen peroxide solution, which, once sterilization is completed, is removed from the surfaces of the packaging material, e.g. evaporated by heating.

Then, packaging assembly 1 is configured to perform, sequentially, the following operations:
- longitudinally folding sheet 4 of packaging material to obtain tube 3 by means of folding means 6, known per se and not described in detail, and longitudinally sealing tube 3 to form a longitudinal sealing band; and
- filling tube 3 (from above) with the pourable product.

The packaging assembly 1 comprises a forming and sealing apparatus configured for performing one or more of:
- forming tube 3 at successive portions thereof to impart (give) a predetermined external shape to such portions;
- transversally sealing tube 3 at equally spaced cross sections, so that pillow packs 2a are obtained;
- cutting tube 3 at the above-mentioned cross sections to separate pillow packs 2a from one another; and
- folding pillow packs 2a to obtain fully folded packages 2.

As shown in the figures, the packaging assembly 1 for forming and sealing the plurality of packages 2 comprises:
- a longitudinal axis A along which the tube 3 advances, that is an advancement direction of the tube 3 is parallel with respect to the longitudinal axis A;
- a sealing device 7 configured for cyclically sealing the tube 3 at successive cross-sections thereof and having a sealing member 70 and a countersealing member 72 arranged at opposite sides of the longitudinal axis A; and
- a dispensing device 8 configured to provide a fluid flow 80, e.g. a liquid flow, cyclically hitting (at least a portion of) the sealing member 70 during operation of the packaging assembly 1.

The fluid flow 80, by hitting the sealing member 70, may cyclically rinse at least a portion of the sealing member 70. As considered herein, rinse comprises the act of cleansing by flushing with liquid (such as water), e.g. to remove corrosive elements on the sealing member 70.

In particular, the dispensing device 8 is a static (non-moving) component during operation of the packaging assembly 1, i.e. the dispensing device 8 is a fixed component (e.g. to a support structure) of the packaging assembly 1 during operation thereof. The dispensing device 8 may be fixed with respect to the longitudinal axis A. This may be opposed to the sealing member 70 and countersealing member 72 which cyclically move with respect to the longitudinal axis A.

Similarly, the fluid flow 80 may follow a stationary (unchanging) and/or constant flow direction F. That is, during operation, the fluid flow 80 is maintained along the (fixed) flow direction F.

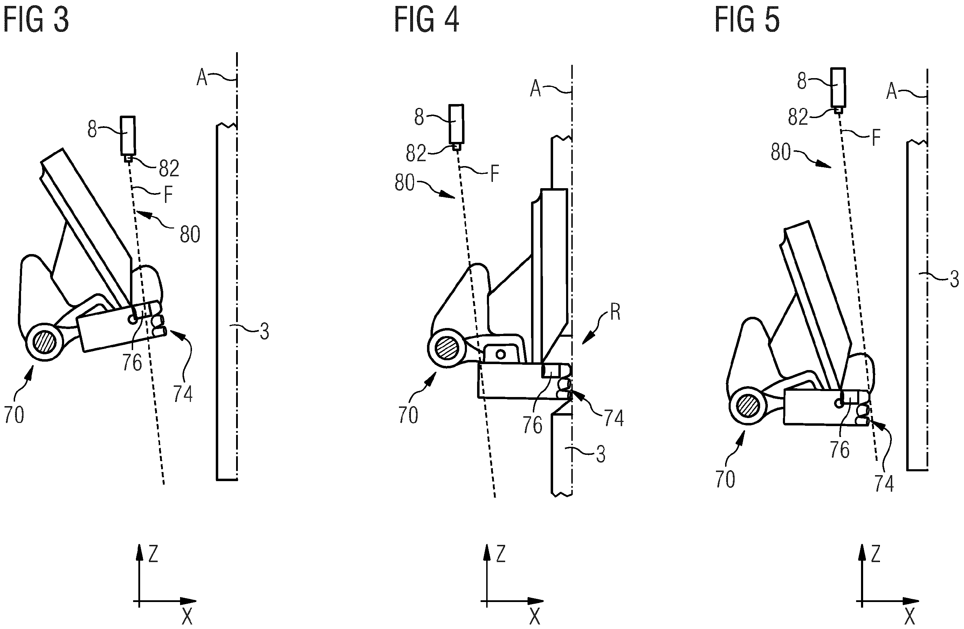

Advantageously, the fluid flow 80 may be directed to a certain region of the packaging assembly 1 and the sealing member 70 may pass through the flow 80 at predetermined moments of its cycle, see e.g. figures 3, 4 and 5 which exemplify part of a cycle of the sealing member 70 according to the instant invention.

Advantageously, the flushing of the sealing member 70 during operation may improve a lifetime of the sealing member 70.

As previously anticipated, the sealing member 70 and the counter sealing member 72 are configured to cyclically move during operation of the packaging assembly 1.

According to a known manner, the tube 3 may advance along the longitudinal axis parallel to a first direction Z. The sealing member 70 and the countersealing member 72 are repeatedly movable towards and away from one another, e.g. along a second direction X orthogonal to the first direction Z, to cyclically cooperate with one another thereby clamping tube 3 in a jaw-like manner at said cross-sections for sealing tube 3 and defining transversal sealing bands which extend along a third direction Y orthogonal to both first direction Z and second direction X.

In particular, as shown in figure 3, the sealing member 70 and the countersealing member 72 (not shown in the figure) may move towards the tube 3. As shown in figure 4, the sealing member 70 and the countersealing member 72 (not shown in the figure) may touch the tube at opposite sides of thereof. Finally, as shown in figure 5, the sealing member 70 and the countersealing member 72 (not shown in the figure) may release the tube 3 and move away therefrom.

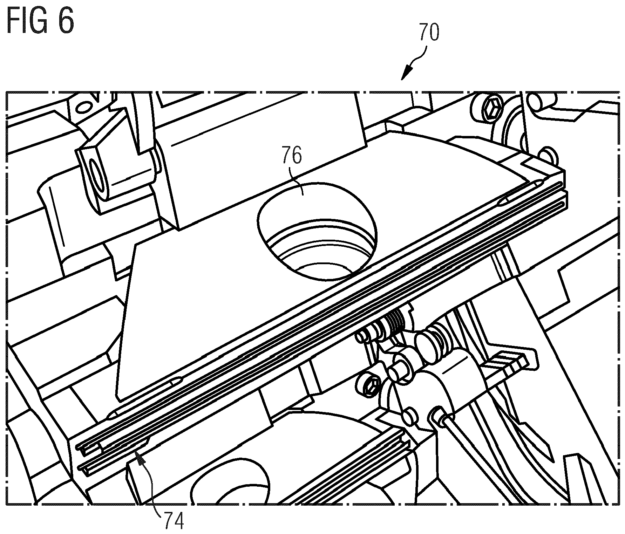

Figure 6 exemplifies a sealing member 70 that may be present in the packaging assembly 1. The sealing member 70 comprises a sealing surface 74 configured to touch (or contact) an external surface of the tube 3 at a sealing region R.

In particular, the fluid flow 80 may hit (rinse or flush) the sealing surface 74 before and/or after the sealing surface 74 touches the tube 3. The sealing member 70 may pass through the fluid flow 80 before or after the sealing member 70 passes at the sealing region R.

Advantageously, the sealing member 70, in particular the sealing surface 74, may be rinsed or flushed before and/or after contact with the tube 3, thereby minimizing or eliminating any possible residual corrosive agents received from the external surface of the tube 3.

The sealing member 70 may comprise a recess 76. In particular, the fluid flow 80 may hit (rinse or flush) the recess 76.

The recess 76 may be configured to receive a cap (not shown) attached to the tube 3 and the fluid flow 80 may hit the recess 76 before the recess 76 receives the cap or after the cap leaves the recess 76.

Advantageously, the sealing member 70, in particular the recess 76, may be rinsed or flushed before and/or after interacting with the cap, thereby minimizing or eliminating any possible residual corrosive agents received from the cap.

For example, during sterilization, the cap may be flushed with hydrogen peroxide. After the bath, on the external surface of the tube, where the cap is positioned, a minimal amount of hydrogen peroxide may remain that may fall on the sealing member 70, and especially in the recess 76, during operation. Advantageously, by flushing the recess 76, any residual agent in the recess 76, that may be corrosive for the sealing member 70, may be diluted or eliminated.

The counter sealing member 72 may similarly comprise a counter sealing surface configured to touch (or contact) an external surface of the tube 3 at the sealing region R at the opposite side of the tube 3 with respect to the sealing surface 74.

According to the instant invention, the dispensing device 8 is configured to release a fluid, e.g. a liquid, preferably water. The fluid flow 80 may cyclically flush the sealing member 70. In other words, the fluid flow 80 may wash the sealing member 70.

In particular, the provided fluid may comprise an anticorrosion fluid, preferably an anticorrosion liquid such as water. The anticorrosion fluid may be used to reduce or prevent corrosion of exposed surfaces of the sealing member 70, such as the sealing surface 74.

The provided fluid may thus comprise water, preferably cold water. Advantageously, the cold water may allow cooling down the sealing member 70 in addition to avoiding a corrosion thereof.

The provided fluid may comprise process water. Advantageously, the use of process water may allow a reduction of water waste or a waste of similar products.

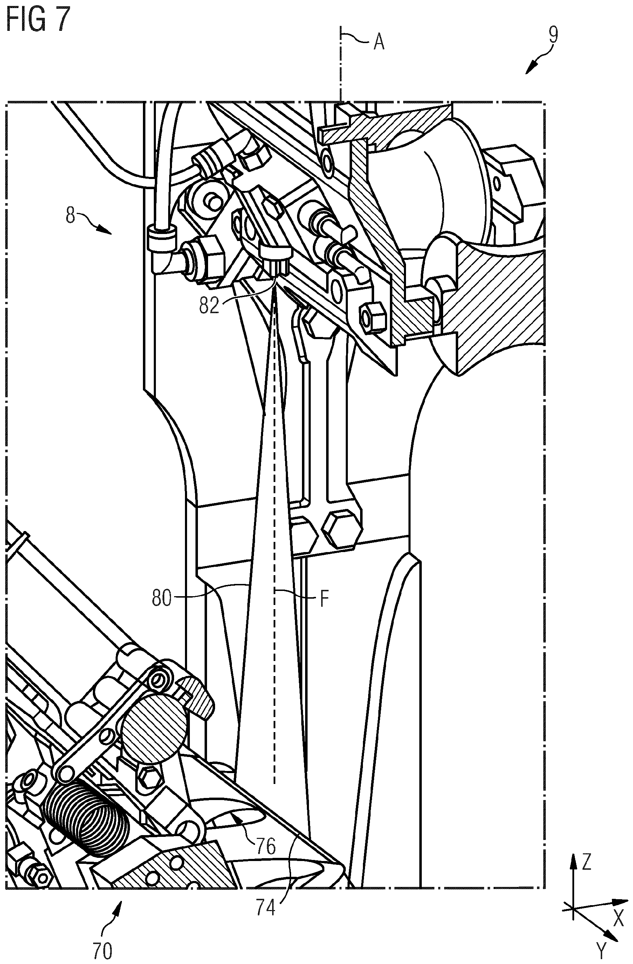

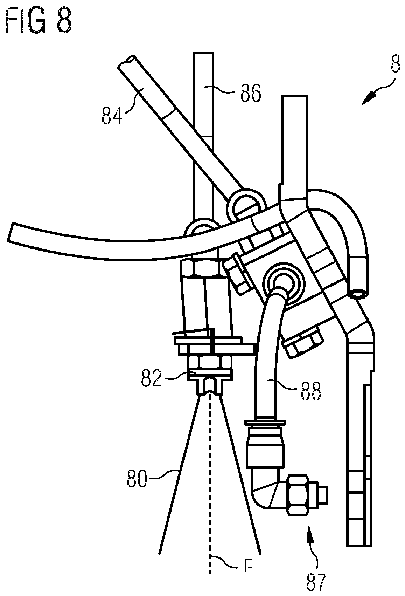

Figures 7 and 8 illustrate further details of the dispensing device 8 according to one or more embodiments.

In particular, the dispensing device 8 may be arranged on the same side of the sealing member 70 with respect to the longitudinal axis A (and the tube 3).

The sealing member 70 may be directly hit by the fluid flow 80. The fluid provided by the dispensing device 8 may fail to contact further surfaces before hitting the sealing member 70.

Advantageously, this way the tube of packaging material may avoid being hit by the fluid flow 80 and the sealing member 70 may avoid being indirectly hit by the fluid flow 80 ricocheting from the tube 3. Accordingly, any possible residues that may be present on the packaging material forming the tube 3 may avoid being transported by the fluid flow 80 from the tube 3 towards the sealing member 70.

As shown in figure 7, the dispensing device 8 may be positioned upstream of the sealing device 7 with respect to the advancing direction of the tube 3, e.g. parallel to the longitudinal axis A. In particular, the fluid flow 80 may be directed vertically and downwards.

The dispensing device 8 may comprise a nozzle 82 for spraying the fluid flow 80. An aperture of the nozzle may face the sealing device 7, in particular the sealing member 70.

The packaging assembly 1 may further comprise a component, positioned (immediately) upstream of the sealing device 7 with respect to the advancing direction of the tube 3 to which the dispensing device 8 may be fixed. The component may be static (i.e. non-moving) during operation of the packaging assembly 1.

The component may comprise a support structure, e.g. a support ring, configured to support the advancing tube 3 during advancement.

Figure 8 shows an example of the dispensing device 8. The dispensing device 8 may comprise an inlet pipe 84 configured to receive the fluid. The dispensing device 8 may then be configured to redirect the fluid towards the nozzle 82 by means of a second pipe 86 for dispensing the fluid flow 80.

The dispensing device 8 may comprise further connectors 87 (only one connector visible in the figure) configured to provide a further fluid flow hitting (only) the tube 3, during operation of the packaging assembly 1. The flow may be used to minimize friction between the tube 3 and the components of the packaging assembly 1. The further connectors 87 may receive the fluid from a further pipe 88 receiving the fluid and may direct the fluid through a further nozzle (not shown in the figures).

In particular, the fluid exiting the nozzle 82 and the further nozzle may be the same. Also, the fluid flow 80 and the further fluid flow may be synchronized.

As shown in the figures, the fluid flow 80 may define a flat spray, in particular non-conic. The fluid flow 80 may substantially extend in a (e.g. single) direction orthogonal to the longitudinal axis A, e.g. a direction parallel to the second axis Y. That is, the fluid flow 80 may resemble a lamina or a blade. In particular, the flow 80 may extend in the same direction as the sealing surface 74.

Optionally, the dispensing device 8 may be configured to hit (rinse or flush) at least an entire width of the sealing surface 74, preferably at least an entire width of the sealing member 70.

According to the instant invention, the dispensing device 8 may be configured to continuously provide the fluid flow 80 during operation. That is, the fluid flow 80 may be a continuous flow.

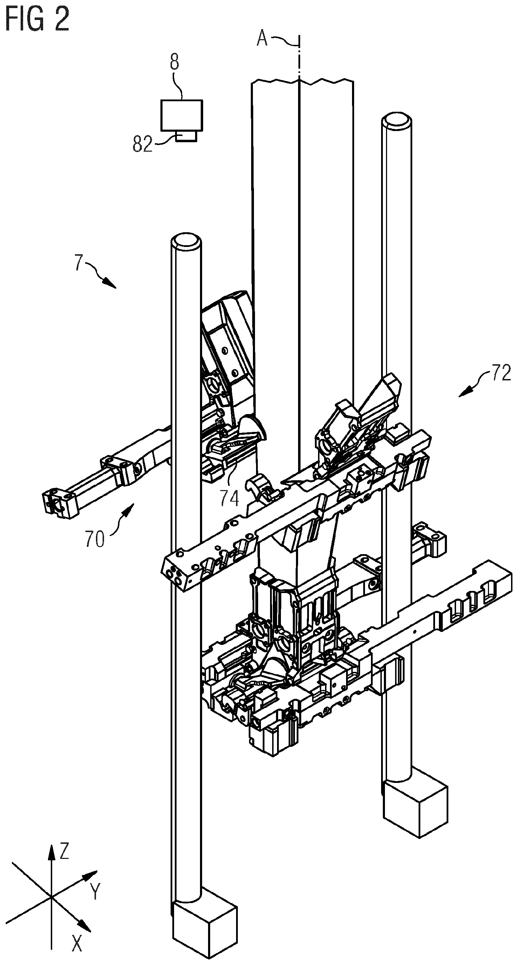

The flow direction F of the fluid flow 80 may be parallel with respect to the longitudinal axis A or the first direction Z as shown in fig. 2. Advantageously, this way it is possible to minimize a possibility of the tube being hit by the fluid flow 80.

The flow direction F may be oblique, i.e. not parallel nor perpendicular, with respect to the longitudinal axis A. The flow direction F may be inclined towards the tube 3 and the fluid flow 80 may directly hit the sealing member 70.

It will be appreciated that, even in case of an inclined flow, the sealing member 70 may be hit by the fluid flow without the flow ricocheting from the tube 3.

Advantageously, this way it is possible to facilitate a flushing of the sealing member 70, e.g. of the sealing surface 74, after the sealing member passes through the sealing region R.

Generally, the dispensing device 8 may be configured to maintain the fluid flow 80 at a distance from the tube 3. That is, the fluid flow 80 may be kept away from the tube 3. This way the fluid flow 80 may avoid collecting residual elements, corrosive for the sealing member 70 and in particular for the sealing element 74, from the external surface of the tube 3.

The fluid flow 80 may hit (rinse or flush) the sealing member 70 away from the sealing region R, e.g. away from the tube 3.

## Claims

1. A packaging assembly (1) for forming and sealing a plurality of packages (2) containing a pourable product starting from a tube (3) of packaging material, the packaging assembly (1) comprising:
- a longitudinal axis (A) along which the tube (3) advances;
- a sealing device (7) configured for cyclically sealing the tube (3) at successive cross-sections thereof and having a sealing member (70) and a countersealing member (72) arranged at opposite sides of the longitudinal axis (A); and
- a dispensing device (8) configured to provide a fluid flow (80) cyclically hitting the sealing member (70).

2. The packaging assembly (1) according to claim 1, wherein the dispensing device (8) is a static component during operation of the packaging assembly (1).

3. The packaging assembly (1) according to claim 1 or claim 2, wherein the dispensing device (8) is arranged on the same side of sealing member (70) with respect to the longitudinal axis (A).

4. The packaging assembly (1) according to any of the previous claims, wherein the sealing member (70) is directly hit by the fluid flow (80).

5. The packaging assembly (1) according to any of the previous claims, wherein the dispensing device (8) is positioned upstream of the sealing device (7) with respect to an advancing direction of the tube (3).

6. The packaging assembly (1) according to any of the previous claims, comprising a component positioned upstream of the sealing device (7) with respect to an advancing direction of the tube (3), wherein the dispensing device (8) is fixed to said component.

7. The packaging assembly (1) according to claim 6, wherein said component is a support structure configured to support the tube (3).

8. The packaging assembly (1) according to any of the previous claims, wherein the provided fluid is an anticorrosion fluid, preferably an anticorrosion liquid such as water.

9. The packaging assembly (1) according to any of the previous claims, wherein the sealing member (70) comprises a sealing surface (74) configured to cyclically touch the tube (3), wherein the fluid flow (80) hits said sealing surface (74) before and/or after the sealing surface (74) touches the tube (3).

10. The packaging assembly (1) according to any of the previous claims, wherein the sealing member (70) comprises a recess (76), wherein the fluid flow (80) is further configured to flush the recess (76).

11. The packaging assembly (1) according to any of the previous claims, wherein the fluid flow (80) defines a flat spray, preferably the fluid flow (80) extends in a direction (Y) orthogonal to the longitudinal axis, even more preferably the fluid flow (80) extends in a same direction as a sealing surface (74) of the sealing member (70).

12. The packaging assembly (1) according to any of the previous claims, wherein the dispensing device (8) is configured to continuously provide the fluid flow (80).

13. The packaging assembly (1) according to any of the previous claims, wherein a direction (F) of the fluid flow (80) is parallel with respect to the longitudinal axis (A) or a direction (F) of the fluid flow (80) is oblique with respect to the longitudinal axis (A).

14. The packaging assembly (1) according to any of the previous claims, wherein the dispensing device (8) is configured to maintain the fluid flow (80) at a distance from the tube (3).

15. The packaging assembly (1) according to any of the previous claims, wherein the fluid flow (80) hits the sealing member (70) away from a sealing region (R).
